Europäisches Patentamt

European Patent Office

Office européen des brevets

(19)

(11) Numéro de publication : **0 305 224 B1**

(12)

# FASCICULE DE BREVET EUROPEEN

(45) Date de publication du fascicule du brevet :
**17.04.91 Bulletin 91/16**

(51) Int. Cl.⁵ : **B62B 3/00**

(21) Numéro de dépôt : **88401498.6**

(22) Date de dépôt : **16.06.88**

(54) **Panneau mobile pour la fermeture d'un réceptacle de transport ou de stockage, ou similaire et procédé de sa fabrication.**

(30) Priorité : **31.07.87 FR 8710898**

(43) Date de publication de la demande :
**01.03.89 Bulletin 89/09**

(45) Mention de la délivrance du brevet :
**17.04.91 Bulletin 91/16**

(84) Etats contractants désignés :
**DE ES GB IT**

(56) Documents cités :
**CH-A- 360 642**
**DE-U- 8 522 308**
**FR-A- 2 419 872**
**FR-A- 2 492 768**
**FR-A- 2 567 737**

(73) Titulaire : **ATELIERS REUNIS CADDIE**
**13, rue de la Mairie**
**F-67300 Schiltigheim (FR)**

(72) Inventeur : **Le Marchand, Alain**
**1, rue de Vendée**
**F-67116 Reichstett (FR)**

(74) Mandataire : **Tony-Durand, Serge**
**Cabinet Tony-Durand 77, rue Boissière**
**F-75116 Paris (FR)**

EP 0 305 224 B1

Jouve, 18, rue Saint-Denis, 75001 PARIS

## Description

La présente invention concerne les panneaux mobiles prévus pour assurer la fermeture de certains réceptacles de stockage ou de transport ou similaires, par exemple certains meubles de rangement ou de présentation.

En effet dans le but de faciliter leur chargement de nombreux réceptacles de stockage ou de transport sont ouverts sur l'un de leur côté, en partie ou complètement. Après leur remplissage il convient donc de fixer, à l'endroit de cette ouverture, un panneau mobile de fermeture qui peut être complètement amovible ou être monté articulé. Il en est de même pour certains chariots de manutention et certains meubles de rangement, notamment les meubles utilisés pour la présentation de produits divers lors de leur mise en vente dans des magasins.

Les panneaux mobiles ainsi prévus sont pourvus, sur leurs côtés verticaux, d'organes de fixation aptes à permettre la fixation de ceux-ci sur les montants des parois voisines du réceptacle ou du meuble à fermer. Ainsi le brevet français 2.567.737 a pour objet un panneau de fermeture dont l'un des côtés verticaux est pourvu de deux éléments de retenue en forme de fourche, adaptés à être emboîtés sur le montant correspondant, cependant que son côté vertical opposé est équipé de deux verrous mobiles montés chacun coulissant sur deux éléments parallèles de guidage prévus dans le plan de ce panneau, à l'endroit d'une ouverture de celui-ci. L'agencement est tel que lors de la mise en place de ce panneau dans sa position verticale, ces deux verrous glissent, sous l'effet de leur simple poids, vers leur position inférieure de fermeture, dans laquelle ils se maintiennent ensuite automatiquement.

Dans d'autres cas, ces panneaux mobiles de fermeture sont montés articulés sur leur bord inférieur et ils comportent, sur chacun de leurs côtés latéraux, un verrou coulissant tel que décrit ci-dessus. L'extrémité de ces verrous est alors recourbée en forme de crochet pour s'emboiter sur le montant voisin dans la position de fermeture, ce qui assure ainsi la fixation en place du panneau correspondant.

Mais, dans un cas comme dans l'autre, la présence de ces verrous soulève certaines difficultés. En effet chacun de ces verrous est en pratique constitué par une lame en métal sur une face de laquelle est rapportée une bride métallique emboîtée sur les éléments de guidage de ce verrou, cette bride étant fixée par des points de soudure sur la lame correspondante. Ceci impose donc d'effectuer le montage en place des verrous avant que le panneau correspondant subisse un traitement de revêtement de protection par électrolyse. En conséquence, à l'issue de ce traitement, les pièces traitées présentent certains défauts de revêtement. Par ailleurs il est fréquent qu'il soit nécessaire d'effectuer des opérations de reprise en fabrication.

C'est pourquoi la présente invention a pour but de permettre la fabrication de tels panneaux en évitant ces inconvénients.

A cet effet, l'invention a pour objet un procédé de fabrication d'un panneau mobile destiné à assurer la fermeture d'un côté ouvert d'un réceptacle de transport, de stockage ou similaire, ce panneau comportant un ou plusieurs verrous d'accrochage destinés à être montés chacun coulissant sur deux éléments parallèles de guidage prévus dans le plan dudit panneau à l'endroit d'une ouverture de celui-ci, et se terminant par une extrémité comportant un crochet apte à s'engager sur un montant de la paroi voisine du réceptacle correspondant, caractérisé en ce que l'on réalise chacun de ces verrous à partir d'une lame de métal, dont l'extrémité opposée à celle comportant le crochet est initialement coudée vers le côté opposé à celui vers lequel fait saillie ce crochet, et qui comporte, en un point intermédiaire de sa longueur, un coude formant une rainure de coulissement ouverte vers le côté vers lequel est coudée ladite extrémité, et qui est apte à recevoir l'un des deux éléments de guidage correspondants prévus sur le panneau, et en ce que l'on effectue la mise en place de chaque verrou en engageant son extrémité coudée entre les deux éléments de guidage de celui-ci, puis en le faisant pivoter dans sa position définitive et enfin en redressant son extrémité initialement coudée dans le plan de la lame constituant ce verrou.

Grâce au présent procédé, les verrous équipant un tel panneau mobile peuvent être montés après le traitement électrolytique de revêtement du panneau correspondant, ce qui évite tout défaut de revêtement de celui-ci. Par ailleurs le mode de montage ainsi rendu possible est beaucoup plus facile et économique.

L'invention a également pour objet un panneau du type en cause, fabriqué par mise en oeuvre du présent procédé.

Un exemple de fabrication d'un panneau de fermeture selon l'invention est décrit ci-après en référence au dessin annexé à simple titre indicatif, et sur lequel :

– La figure 1 est une vue en perspective d'un chariot de transport comportant un panneau de fermeture selon l'invention.

– La figure 2 est une vue partielle en coupe horizontale d'un panneau similaire de fermeture comportant un verrou classique de fixation.

– La figure 3 est une vue en perspective représentant l'un des verrous du panneau de fermeture selon l'invention, et ce dans la forme que revêt ce verrou avant son montage.

– Les figures 4 à 7 sont des vues similaires à la figure 2, mais qui illustrent les différentes phases du mode particulier de montage du verrou représenté à la figure 3.

– Les figures 8 à 11 sont des vues partielles en élévation qui correspondent chacun à l'une des différentes vues en coupe des figures 1 à 7.

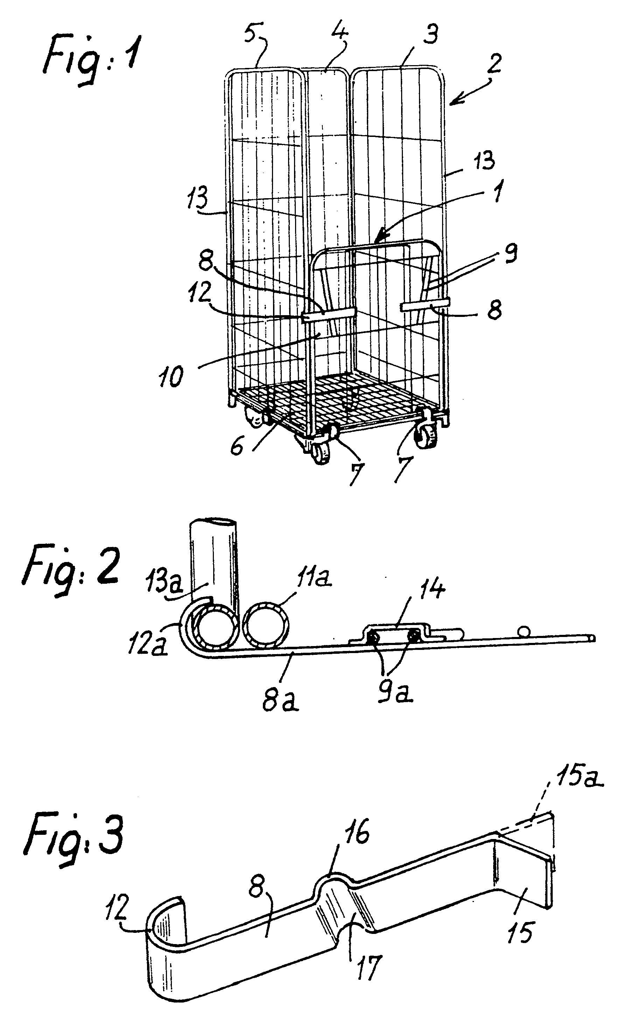

Dans l'exemple représenté à la figure 1, le panneau de fermeture selon l'invention qui, est désigné par la référence générale 1, équipe un chariot 2 de transport comportant simplement trois parois 3, 4 et 5 constituées par des grilles en fil métallique. Ce panneau, qui est également constitué par une grille en fil métallique, est donc destiné à assurer la fermeture de ce chariot sur son quatrième côté, après achèvement de son remplissage.

A cet effet, ce panneau est mobile par articulation de son bord inférieur sur le côté correspondant du fond 6 du chariot, et ce par l'intermédiaire d'anneaux 7 d'articulation ou similaires. Sur ses côtés verticaux, ce panneau est équipé de deux verrous désignés par la référence générale 8. Chacun de ces verrous est constitué par une lame métallique montée coulissante sur deux éléments de guidage 9 en fil métallique, et qui sont prévus à l'endroit d'une ouverture 10 du panneau correspondant. En réalité comme ce panneau est constitué par une grille métallique, ces ouvertures correspondent à l'espace délimité à cet endroit par les fils entrecroisés de cette grille.

L'extrémité de chacun de ces verrous, qui fait saillie au-delà du montant vertical correspondant 11 du panneau, est recourbé sur elle-même de façon à constituer un crochet 12 susceptible de s'engager autour du montant voisin 13 de la paroi latérale adjacente, afin d'assurer la retenue en place du présent panneau 1.

Dans les panneaux de fermeture actuels de ce genre, le montage de chacun de ces verrous sur les éléments de guidage correspondants est assuré au moyen d'une bride rapportée contre la face interne de la lame du verrou correspondant. Du reste la figure 2 illustre un tel mode de montage. Sur cette figure les différentes pièces correspondant à celles représentées sur la figure 1 sont indiquées par les mêmes chiffres de référence affectés de l'indice "a".

Comme on peut le constater sur cette figure 2, le verrou correspondant 8a est monté sur les deux éléments de guidage 9a grâce à une bride 14 rapportée sur la face interne de la lame constituant ce verrou. Cette bride assure le coulissement vertical de la lame 8a du verrou sur les deux éléments de guidage 9a, ce qui est essentiel pour le fonctionnement du verrou. En effet, de même que les éléments de guidage 9 représentés à la figure 1, les éléments de guidage 9a sont inclinés de façon à obliger chaque verrou à effectuer un mouvement de translation vers le milieu du panneau lors de son coulissement de haut en bas, afin que son extrémité coudée 12a vienne s'engager sur le montant 13a voisin. Il est donc indispensable que chaque verrou soit retenu sur les éléments de guidage correspondant et astreint à coulisser sur ceux-ci pour subir le mouvement de translation qui leur est imposé par l'inclinaison de ces éléments.

Toutefois, ainsi qu'il a déjà été exposé, la présence d'une telle bride 14 a pour inconvénient d'obliger à ce que le montage du verrou soit réalisé avant l'exécution du traitement de revêtement par électrolyse. Par ailleurs ce mode de montage nécessite l'exécution de plusieurs points de soudure et entraîne fréquemment des reprise en fabrication.

C'est donc pour éviter ces inconvénients qu'a été conçu le verrou 8 représenté à la figure 3 et qui équipe le chariot illustré à la figure 1. Ce verrou est également constitué par une lame métallique dont une extrémité 12 est recourbée en forme de crochet. Quant à l'extrémité opposée 15 de cette lame, elle est initialement coudée vers le côté opposé à celui vers lequel fait saillie le crochet 12. Toutefois il s'agit là d'une forme particulière que revêt initialement cette extrémité avant son montage, sa forme définitive 15a étant représentée en pointillé sur la figure 3. Or comme on peut le constater, cette extrémité se trouve alors placée dans le plan même de la lame 8.

Par ailleurs, en un point intermédiaire de sa longueur, la lame 8 présente un coude 16 formant une rainure de coulissement 17 ouverte sur le côté vers lequel est coudée l'extrémité 15. Cette rainure, qui est destinée à recevoir l'un des éléments de guidage 9 du verrou, présente une inclinaison similaire à celle de celui-ci.

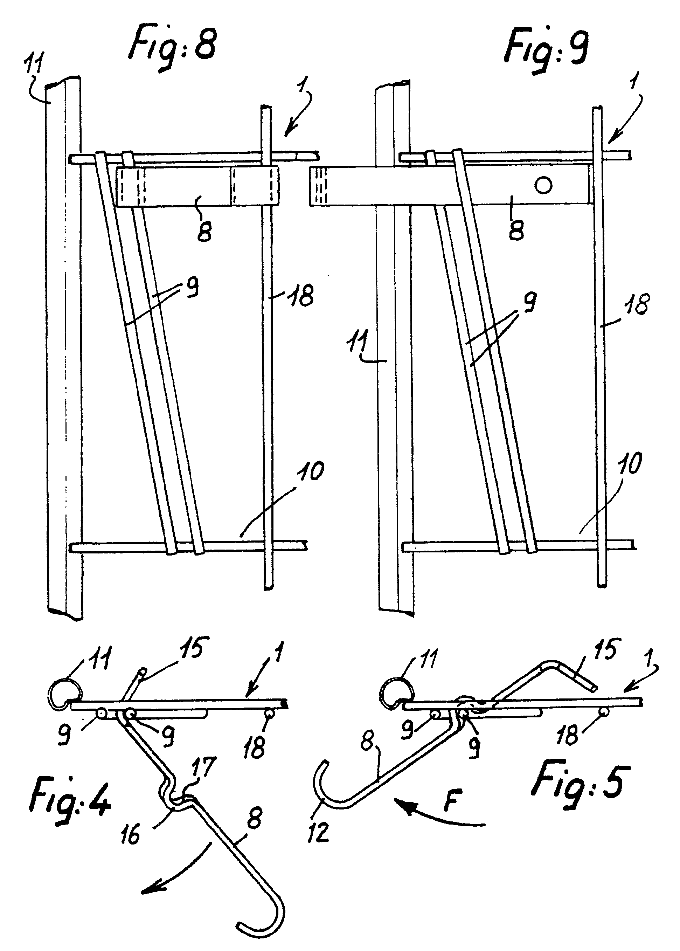

Grâce à sa forme particulière, ce verrou peut être mis en place après achèvement complet de la fabrication du panneau 1, donc après l'exécution du traitement de revêtement des fils de celui-ci par électrolyse. Pour cette mise en place, il convient d'engager l'extrémité coudée 15 de chaque verrou entre les deux éléments de guidage 9 de celui-ci, en présentant ce verrou dans la position représentée aux figures 4 et 8.

On fait ainsi coulisser le verrou entre les deux fils de guidage 9 jusqu'à ce que l'un d'eux vienne se loger à l'intérieur de la rainure 17, comme illustré aux figures 5 et 9. Celles-ci représentent le verrou correspondant au cours du mouvement de pivotement selon la flèche F qui lui est ensuite imparti.

Ce mouvement de pivotement a pour effet de faire passer l'extrémité coudée 15 de l'autre côté du panneau 1. Cette extrémité peut alors échapper au fil vertical voisin 18 de ce panneau du fait même que la longueur du verrou est raccourcie en raison de la forme provisoirement coudée de cette extrémité. Par ailleurs ce passage est également rendu possible par le fait que les opérations initiales représentées aux figures 4 et 5. ainsi qu'aux figures 8 et 9, sont réalisées alors que le verrou est placé dans sa position supérieure. En effet à cet endroit les fils de guidage 9 présentent un écartement maximum par rapport au fil vertical 18 voisin du panneau.

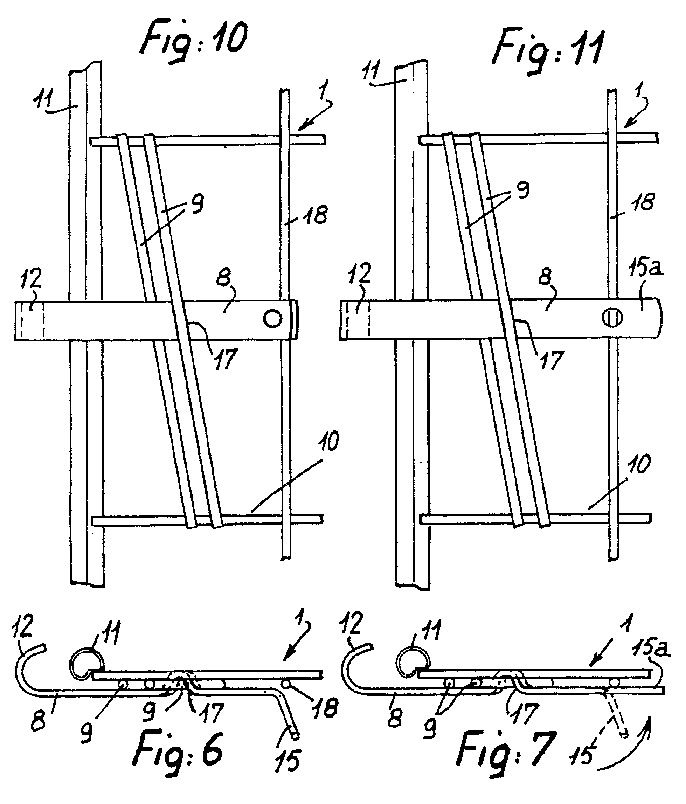

Après que le verrou ait complètement pivoté, il se trouve dans la position représentée aux figures 6 et 10. Il suffit alors de rabattre l'extrémité 15 pour la placer dans sa position définitive 15a représentée en trait plein sur les figures 7 et 11. Dans cette position cette extrémité est alors située dans le même plan que la lame 8 constituant le verrou correspondant.

A l'issue de cette dernière opération, le verrou 8 est définitivement monté en place et il est parfaitement retenu sur l'un des éléments de guidage 9 qui assure sa translation dans le sens horizontal pendant son coulissement dans le sens vertical. Lors de ce coulissement le coude 16 de la lame 8 joue en quelque sorte le rôle d'un cavalier de coulissement placé à cheval sur l'élément de guidage correspondant 9. Ce cavalier remplace donc, pour cette fonction, la bride 14 prévue précédemment, et ce sans en avoir les inconvénients.

En effet, comme déjà indiqué la conception particulière du présent verrou permet donc un mode de montage qui supprime complètement les inconvénients précédemment exposés. De plus ce mode de montage est beaucoup plus facile et économique.

Le panneau de fermeture selon l'invention ne se limite pas à l'exemple représenté. En effet ce panneau peut fort bien être complètement amovible au lieu d'être monté articulé sur son bord inférieur. Dans un tel cas ce panneau peut être équipé, sur chacun de ses côtés verticaux, de deux verrous coulissants tels que décrits précédemment. Dans un tel cas il est également possible de prévoir deux fourches de retenue ou autres organes d'accrochage sur l'un des bords verticaux et deux verrous coulissants sur le bord vertical opposé.

Par ailleurs le présent panneau de fermeture peut éventuellement être plein, une fenêtre 10 étant alors amenagée à l'endroit de chacun de ses verrous 8 de fixation en y prévoyant deux éléments de guidage inclinés 9.

Comme déjà indiqué, le panneau de fermeture selon l'invention peut équiper non seulement des chariots de transport tels que celui représenté à la figure 1, mais également des réceptacles de stockage ou de transport, ou bien encore des meubles de rangement ou de présentation. Du reste l'invention a également pour objet les réceptacles de transport ou de stockage, tels que conteneurs, chariots ou meubles de rangement qui sont équipés d'un ou plusieurs panneaux mobiles de fermeture tels que décrits précédemment.

## Revendications

1. Procédé de fabrication d'un panneau mobile (1) destiné à assurer la fermeture d'un côté ouvert d'un réceptacle (2) de transport, de stockage ou similaire, ce panneau (1) comportant un ou plusieurs verrous (8) d'accrochage destinés à être montés chacun coulissant sur deux éléments parallèles (9) de guidage prévus dans le plan dudit panneau à l'endroit d'une ouverture de celui-ci, et se terminant par une extrêmité comportant un crochet (12) apte à s'engager sur un montant (13) de la paroi voisine (3, 5) du réceptacle correspondant (2), caractérisé en ce que l'on réalise chacun de ces verrous (8) à partir d'une lame de métal, dont l'extrémité (15) opposée à celle comportant le crochet (12) est initialement coudée vers le côté opposé à celui vers lequel fait saillie ce crochet, et qui comporte, en un point intermédiaire de sa longueur, un coude (16) formant une rainure (17) de coulissement ouverte vers le côté vers lequel est coudée ladite extrémité (15), et qui est apte à recevoir l'un des deux éléments de guidage (9) correspondants prévus sur le panneau (1), et en ce que l'on effectue la mise en place de chaque verrou (8) en engageant son extrémité coudée (15) entre les deux éléments de guidage (9) de celui-ci, puis en le faisant pivoter dans sa position définitive et enfin en redressant son extrémité initialement coudée (15) dans le plan de la lame constituant ce verrou.

2. Panneau mobile (1) pour la fermeture d'un réceptacle (2) de transport ou de stockage ou similaire, comportant un ou plusieurs verrous (8) d'accrochage montés chacun coulissant sur deux éléments parallèles (9) de guidage prévus dans le plan de ce panneau à l'endroit d'une ouverture de celui-ci, et se terminant par un crochet (12) apte à s'engager sur un montant (13) de la paroi voisine (3, 5) du réceptacle correspondant (2), caractérisé en ce que ce panneau ayant été fabriqué par mise en oeuvre du procédé selon la revendication 1, chacun des verrous (8) prévus sur ce panneau est constitué par une lame en métal comportant, en un point intermédiaire de sa longueur, un coude (16) formant une rainure (17) de coulissement ouverte vers le côté opposé à celui vers lequel fait saillie le crochet (12) d'extrémité, cette rainure servant de logement pour l'un des deux éléments de guidage (9) correspondants prévus sur le panneau (1), cependant que l'extrémité de cette lame, qui est opposée à celle comportant le crochet (12), est disposée contre le panneau.

## Ansprüche

1. Verfahren zur Herstellung einer zum sicheren Schließen einer offenen Seite eines Transport- oder Lagerbehälters (2) oder dergleichen dienenden beweglichen Tür (1), die einen oder mehrere dem Schließen dienende Riegel (8) aufweist, die jeweils an zwei parallelen Führungselementen (9), die in der Haupterstreckungsebene der Tür (1) an der Stelle einer Öffnung in der Tür angeordnet sind, verschiebbar gelagert sind, und die sich jeweils bis zu einem einen Haken (12) aufweisenden Ende erstrecken, wobei der Haken (12) an einen Pfosten (13) der benachbarten Wand (3, 5) des Behälters (2) anlegbar ist, dadurch gekennzeichnet, daß jeder Riegel (8) aus einem Metallstreifen hergestellt wird, dessen eines, dem Haken (12) abgekehrte Ende (15) zunächst entgegengesetzt zu der Richtung, in der der Haken (12) vorspringt, umgebogen wird, und der im Bereich seiner Längsausdehnung eine Ausbiegung (16) aufweist, wobei die Ausbiegung (16) eine Gleitrinne (17) zum freien Verschieben in Richtung auf daß gebogene Ende (15) und zur Aufnahme eines der beiden an der Tür (1) angeordneten Führungselemente (9) bildet, und daß jeder Riegel (8) an seinem Platz eingebaut wird, indem sein gebogenes Ende (15) zwischen den zwei Führungselementen (9) hindurchgesteckt, sodann der Riegel in seine endgültige Position gedreht und letztlich sein zunächst gebogenes Ende (15) in die Haupterstreckungsebene des den Riegel bildenden Metallstreifens wieder geradegerichtet wird.

2. Bewegliche Tür (1) für das Schließen eines Transport- oder Lagerbehälters (2) oder dergleichen mit einem oder mehreren dem Schließen dienenden Riegeln (8), die jeweils an zwei parallelen Führungselementen (9), die in der Haupterstreckungsebene der Tür (1) an der Stelle einer Öffnung in der Tür angeordnet sind, verschiebbar gelagert sind und die sich jeweils bis zu einem an einen Pfosten (13) der benachbarten Wand des Behälters (2) anlegbaren Haken (12) erstrecken, dadurch gekennzeichnet, daß bei der nach dem Verfahren nach Anspruch 1 hergestellten Tür jeder an der Tür (1) vorgesehene Riegel aus einem Metallstreifen besteht, der im Bereich seiner Längsausdehnung eine Ausbiegung (16) aufweist, die eine Gleitrille (17) zum freien Verschieben in die dem vorspringenden Haken (12) abgewandten Richtung bildet, wobei die Gleitrinne als Aufnahmeraum für eines der zwei an der Tür (1) vorgesehenen Führungselemente (9) dient, während das dem Haken (12) abgekehrte Ende des Metallstreifens an der Tür (1) anliegt.

## Claims

1. Method of fabrication of a movable panel (1) which is intended to close an open side of a receptacle (2) for transportation, storage or the like, said panel (1) being provided with one or a number of fastening bolts (8) such that each bolt is intended to be slidably mounted on two parallel guiding members (9) located in the plane of said panel opposite to an opening of this latter, and terminates in a hooked end (12) which is capable of engaging on an upright member (13) of the adjacent wall (3, 5) of the corresponding receptacle (2), characterized in that each of these bolts (8) is formed from a metal strip, the end portion (15) of said strip opposite to the hooked end portion (12) being initially elbowed in the direction opposite to the direction of projection of said hook, and said strip being provided at an intermediate point of its length with an elbowed portion (16) forming a sliding-motion groove (17) which is open on the same side as said elbowed end portion (15) and which is capable of receiving one of the two corresponding guiding members (9) provided on the panel (1), and that each bolt (8) is positioned by engaging its elbowed end (15) between the two guiding members (9) of this latter, then by causing it to pivot to its final position and finally by straightening its initially elbowed end portion (15) in the plane of the strip which forms said bolt.

2. Movable panel (1) for closing a receptacle (2) for transportation or storage or the like, comprising one or a number of fastening bolts (8) such that each bolt is slidably mounted on two parallel guiding members (9) located in the plane of said panel opposite to an opening of this latter and terminates in a hook (12) which is capable of engaging on an upright member (13) of the adjacent wall (3, 5) of the corresponding receptacle (2), characterized in that said panel having been fabricated by applying the method in accordance with claim 1, each of the bolts (8) provided on said panel is constituted by a metal strip having at an intermediate point of its length an elbowed portion (16) forming a sliding-motion groove (17) which is open on the opposite side with respect to the projecting end hook (12), said groove being intended to serve as a housing for one of the two corresponding guiding members (9) provided on the panel (1) whilst the end portion of said strip which is opposite to the hooked end portion (12) is placed against the panel.

Fig. 1

Fig. 2

Fig. 3

Fig. 8

Fig. 9

Fig. 4

Fig. 5

Fig: 10

Fig: 11

Fig: 6

Fig: 7